# EUROPEAN PATENT SPECIFICATION

(11) **EP 1 163 947 B1**
(45) Date of publication and mention of the grant of the patent: **19.05.2004**
(21) Application number: 01113939.1
(22) Date of filing: 07.06.2001
(51) Int. Cl.: B01D 53/26, F26B 21/06

(54) **Desiccant drying apparatus and method for controlling the airflow in the apparatus**
Trocknungsvorrichtung und Verfahren zur Steuerung des Luftdurchflusses in der Vorrichtung
Dispositif de séchage par deshydratant et procédé de réglage du debit d'air dans le dispositif

(30) Priority: 16.06.2000 US 211973 P
(43) Date of publication of application: 19.12.2001
(73) Proprietor: MANN+HUMMEL ProTec GmbH, 71636 Ludwigsburg (DE)
(72) Inventor: Crawford, Robert R., Stafford, VA 22554 (US)
(74) Representative: Voth, Gerhard, Dipl.-Ing.

(56) References cited:
- EP-A- 0 884 085
- WO-A-99/26034
- GB-A- 474 976
- US-A- 3 950 154

## Description

This invention relates to a method and a system for controlling airflow in a multiple bed desiccant drying system, particularly in a twin tower desiccant dehumidifier, and particularly during a regeneration phase, and during transition periods between phases.

Multiple desiccant bed systems used for drying a synthetic plastic material are known, in which a moisture-laden gas stream is formed as the exit gas from a hopper in which plastic granules are dried by a stream of drying air. During an adsorption phase, the exit gas is conducted through one or more drying vessels filled with an adsorption medium, whereby the adsorption medium extracts the moisture from the gas so that the resulting dry gas can be used again as a drying gas for drying plastic granules.

When the adsorption medium in a drying vessel is saturated with moisture, the drying vessel is transferred to a regeneration phase in which heated ambient air is conducted through the adsorption medium which takes up and carries away the moisture which was adsorbed therein. The ambient air used to dry the adsorption medium typically itself contains moisture, which increases the drying time required to regenerate the adsorption medium.

Since the adsorption medium is heated during the regeneration phase by the heated regeneration air, the adsorption medium typically must subsequently be cooled with a cooling air flow prior to a transition to the adsorption phase. If moisture-laden ambient air is used as the cooling air, the adsorption medium will adsorb the moisture therefrom, reducing the efficiency (i.e. dryness) of the regeneration process.

By using a multiple bed system, the drying process can be continued essentially without interruption, by utilizing one or a portion of the beds for adsorption, while simultaneously regenerating other of said beds, by appropriately channeling the process air flow.

Prior art twin tower dehumidifiers typically use two four-way valves to divert the respective air streams to the process and regeneration desiccant towers. This is done by porting the left and right sides of the four way valve to the desiccant towers, and by using the top port for the process air and the bottom port for the regeneration air. In this manner twin tower units are constructed for simple selection of the process airflow to one tower and the regeneration airflow to the other tower. The control of regeneration heating is limited to turning the regeneration fan and heater on.

An alternate method of construction for a twin tower adsorber system is to use a poppet type valve that will divert a central, process air inlet port to the left or right tower, and will then "bleed" a fixed airflow for the regeneration of the opposite tower. In this "bleed" method of regeneration with a continuous regeneration airflow, the control of the regeneration is limited to applying heat, with no control of the airflow.

Multiple desiccant tower dehumidifiers typically use a rotating "carousel" which holds the desiccant towers. In these systems the control of the regeneration is governed by the rotation of the desiccant system and is limited to the progressive rotation of the towers from one stage to the next. There is no individual control of the regeneration airflow with this type of unit. Heating of the desiccant is normally accomplished by the use of an external heating unit with the regeneration airflow conveying the necessary heat into the desiccant tower.

A multiple bed desiccant drying system with a method for controlling the airflow is known for example from WO-A-9 926 034.

In US-A-5 926 969, a system and method of operation is disclosed in which two towers are connected by a 4-valve system. The 4-valve system is controlled such that the process air stream is progressively moved from the saturated bed to the regenerated bed. In that invention the terminal disruption of the dewpoint is minimized by any residual heat that remains in the fresh tower being brought online.

A further improvement is described in US-A-6 336 278. This improvement to the twin tower desiccant dehumidifier uses a split air stream from the inlet to the system as the cooling medium. In a typical closed loop process system, this inlet air stream has a much lower water content than the ambient air used for regeneration heating. The benefit of this improvement to the regeneration cooling of the desiccant was developed through use of the relative dry process return air as the desiccant cooling medium. While this is a successful method of operation, it has required the use of closed loop control for the management of the cooling air stream to avoid disruption of the process air quality. This is accomplished by the use of modulating control of the four-way dry air control valves of the dehumidifier with monitoring instruments to assure the proper control of the process. As in most industrial processes, the economics of the process system are under substantial discussion, and a premium is placed on reduction of costs for the equipment. Since the control costs are a major concern, there has remained a need for a different method of air control which would enable a less expensive control system to develop equal or greater process performance.

In previously known drying systems, a problematic issue is disruption of the process air temperature and dew point quality when changing from the saturated tower to the freshly regenerated tower. Furthermore, in previously known drying systems, bringing a heat exchanger online at the appropriate time without undue complexity of valves is a known problem. As an additional issue, previously known drying systems may be contaminated by room air during diverter valve changes. In addition, since the common instrumentation used to determine the dryness of the process air stream may require from 30 to 60 minutes to recover from the exposure to a high intermittent dewpoint, it is difficult to determine and monitor the humidity level of the process air in previously known drying systems.

### Summary of the Invention

In view of the above, there is a need for an improved method and a system for controlling airflow in a multiple bed desiccant drying system.

There is also a need for a method and a system which can be implemented in existing multiple bed desiccant drying systems with a minimum of components, effort, and cost.

These and other needs have been met according to the present invention as discussed in the following.

The present invention utilizes a pair of three-way poppet valves at the inlet and the outlet of the regeneration air circuit. This enables the direction of the cooling air loop at the completion of the desiccant regeneration heating cycle. When the heating period has ended, the regeneration air control valve will shift to block the room air access and divert a bleed stream of relatively dry process air through the hot, dry desiccant. The air flow for this bleed is controlled by the size of the port orifice to control the rate of cooling. This method makes use of the process air intake cooling coil heat exchanger or cooling coil; which is commonly found in many higher performance desiccant systems, to lower the temperature of the hot effluent of the freshly purged desiccant bed. The exact volume of cooling air is not critical to the successful operation of the system since the heat exchanger removes the additional energy before the combined air enters the 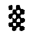 on line 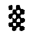 desiccant bed. At the end of the regeneration cooling period, the temperature and dew point performance of the purged bed has equalized with the used desiccant bed, and a seamless changeover of the multiple tower, four-way diverter valves can be made without disruption of the downstream process.

By introducing a multi ported valve in the regeneration airflow circuit, the present invention isolates the tower system from the ambient air that would otherwise enter the drying system while the diverter valves are in intermediate or indeterminate positions during tower exchange.

The present invention thus relates to a novel desiccant dehumidifier using a unique method of regeneration airflow control to optimize the cooling of a hot, purged desiccant bed before it is placed in the process flow. By directing a regulated flow of air from the closed loop adsorption system, it can be used to cool the purged desiccant without adversely affecting the process. The present invention has the added benefit of expediting the cooling process to enable reduction in the size of the adsorption desiccant since the limitations of the purge heating and cooling cycle can be reduced by the use of this improvement. The present invention uses an orifice regulated cooling flow to maximize the rate of cooling without addition of high humidity ambient air as a cooling medium for the desiccant system.

High performance desiccant systems typically include a heat exchanger on the inlet of the desiccant adsorption system to depress the operating temperature of the desiccant system to a range where economical use of a particular sized adsorption device is afforded. An especially preferred construction of the present invention uses this heat exchanger in combination with the basic twin tower desiccant system as the core of the device, with the addition of two simple valves at the inlet and outlet of the regeneration air ports. These valves allow the intake and discharge of room air when the regeneration purge heating is engaged to remove the adsorbed water from the desiccant being regenerated. At the conclusion of the purge heating, these valves will be shifted to close the room air intake and outlet, while then connecting the lower side of the desiccant bed to be cooled with the intake of the current adsorption air heat exchanger. The upper side of the hot desiccant bed is connected to the discharge of the adsorption air blower, thereby providing a positive flow of dry air to the top of the hot desiccant bed that will be discharged to the inlet of the process air heat exchanger. In this way, the present invention enables the cooling of the hot desiccant using relatively dry air from the closed loop process air stream without detrimentally affecting the dry air discharged from the on-line adsorption desiccant bed.

The present invention may be either incorporated into new, or retrofitted to existing, twin tower desiccant dehumidifiers. The disruptive effects of changing the tower diverter valves of a conventional twin tower desiccant dehumidifier are substantially reduced. This is accomplished through the use of a multi port valve applied to the regeneration air circuit of the dehumidifier system.

### Brief Description of the Drawings

The invention will be described in further detail hereinafter with reference to preferred embodiments illustrated in the accompanying drawings in which:
Figure 1 shows a schematic view of a drying system according to a preferred embodiment of the present invention; and
Figure 2 shows a view of a regeneration air control valve in the cooling position.

### Detailed Description of Preferred Embodiments

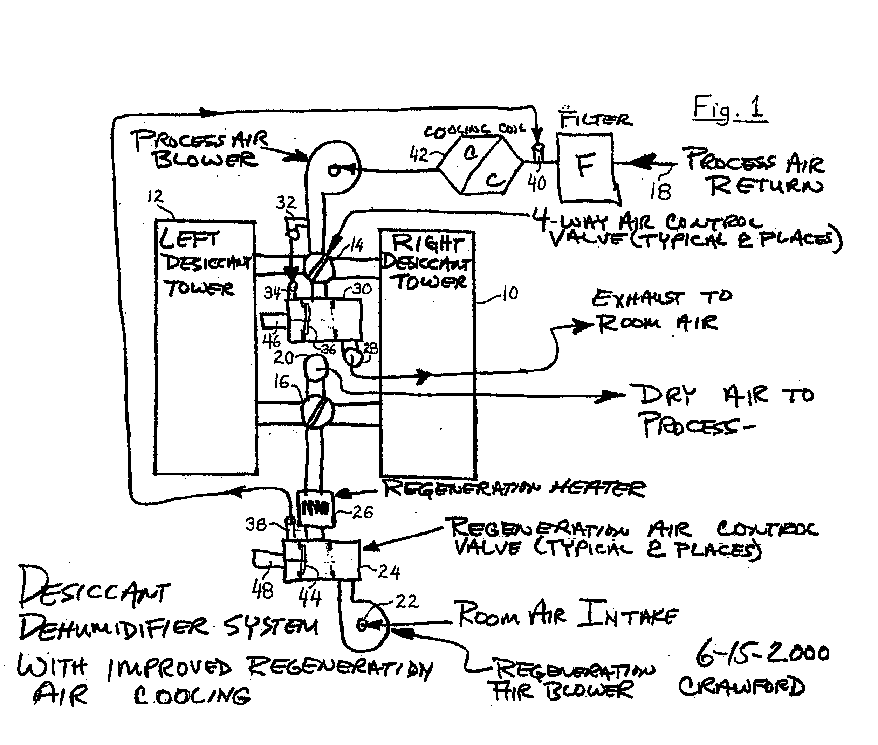

Referring to Figure 1, a first tower 10 and a second tower 12 of a twin tower desiccant dehumidifier are schematically shown, each of which contains an adsorption medium (i.e. desiccant) for removing moisture from a process gas, for example process air used to dry plastic pellets. Each of the first and second towers 10, 12 communicate with each of first and second four-way diverter valves 14, 16. The four-way diverter valves 14, 16 are controllable to a plurality of positions in order to direct airflow. In the positions shown in Figure 1, the diverter valves 14, 16 direct airflow such that the first tower 10 is in a regeneration (i.e., drying) phase, while the second tower 12 is in an adsorption phase.

A process gas inlet 18 communicates with the first four-way diverter valve 14, which valve 14 is controllable to direct flow into either of the first tower 10 or the second tower 12. In the position shown in Figure 1, the first valve 14 directs moist process gas, for example process air, entering the process gas inlet 18 into the second tower 12.

A process gas outlet 20 communicates with the second four-way diverter valve 16, which valve 16 is controllable to direct flow from either of the towers 10, 12 to said outlet 20. In the position shown in Figure 1, the second valve 16 directs dried process gas from the second tower 12 to the process gas outlet 20.

As mentioned above, in Figure 1 the second tower 12 is shown in the adsorption phase. The process gas outlet 20 and the process gas inlet 18 are connected in a circuit with a drying vessel, not shown, for example a drying hopper containing a material to be dried such as plastic pellets. The dried process gas exits the process gas outlet 20, picks up moisture as it passes through the material to be dried in the drying vessel, and returns via the process gas inlet 18, passing through the second desiccant tower 12 to be dried again.

As mentioned above, in Figure 1 the first tower 10 is shown in the regeneration phase. A regeneration inlet 22 communicates with the second four-way diverter valve 16, with a first regeneration air control valve 24 and a heater 26 being interposed therebetween. Regeneration gas, for example ambient air, entering the regeneration gas inlet 22 is heated by the heater 26, and is directed by the second valve 16, in the position shown in Figure 1, into the first desiccant tower 10. The heated regeneration gas picks up moisture from the moist adsorption medium in the first desiccant tower 10, and is directed via the first diverter valve 14 to a regeneration gas outlet 28, which may communicate, for example, with the ambient atmosphere or with a heat exchanger for recovery of heat energy. A second regeneration air control valve 30 is disposed between the first diverter valve 14 and the regeneration gas outlet 28.

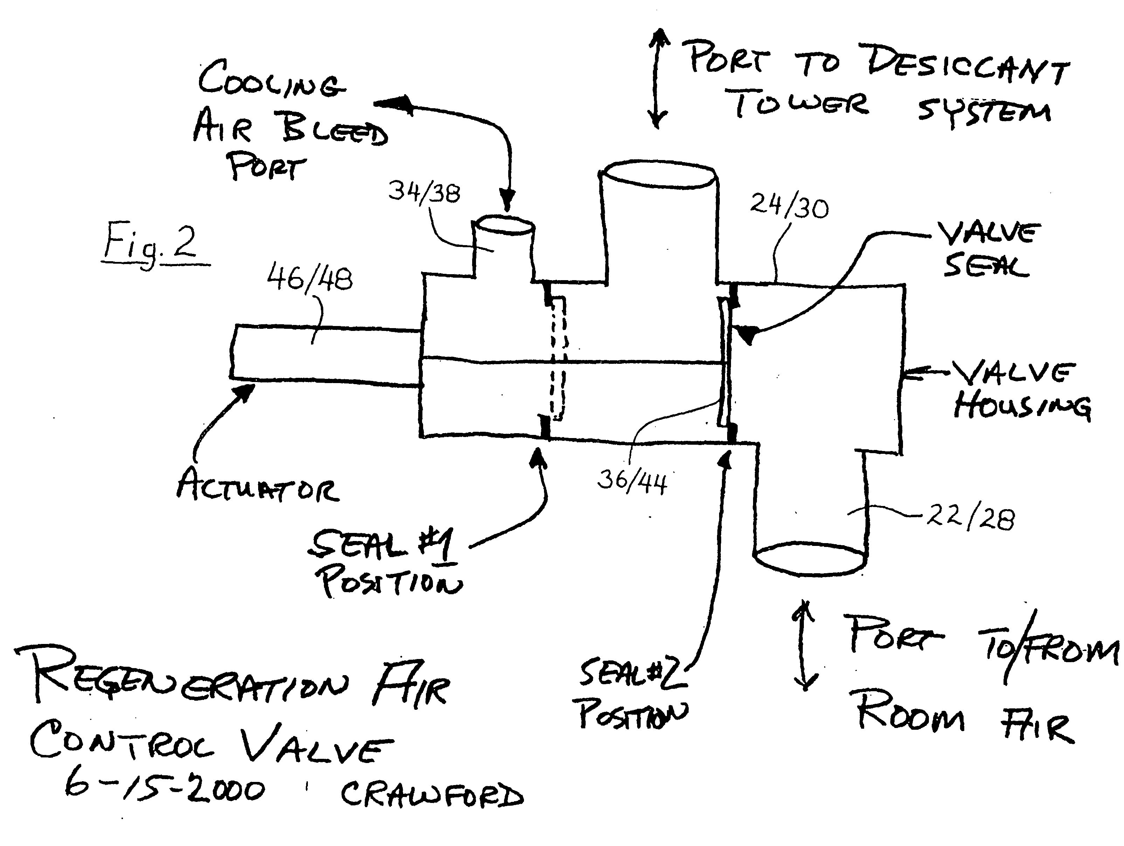

Figure 2 shows an enlarged view of a regeneration air control valve 24, 30 with inlet/outlet 22/28, bleed air port 34/38, valve poppet or plunger 36/44 and actuator 46/48. During the regeneration heating phase, both of the first and second regeneration air control valves 24, 30 are in the position shown in Fig. 1 (shown in broken lines and identified as seal position #1 in Fig. 2) in which the valves are open to the room to allow gas to pass therethrough.

A process air bleed stream outlet 32 is provided between the process air blower and the first diverter valve 14. Bleed stream outlet 32 communicates with an air bleed port 34 on regeneration air control valve 30. During the regeneration heating phase, when the plunger 36 of regeneration air control valve 30 is in seal position No. 1 as depicted in Figure 1, the bleed stream connection formed by bleed stream outlet 32 and air bleed port 34 is closed off, so that no bleed stream of process air passes therethrough.

Similarly, regeneration air control valve 24 is provided with an air bleed port 38, which in turn is connected to an inlet 40 on the process air line upstream of heat exchanger 42. When the plunger 44 of regeneration air control valve 24 is in seal position No. 1 as shown in Figure 1, then this bleed stream connection is also closed off so that no bleed stream can flow therethrough.

After the adsorption medium in the first tower 10 has been de-moisturized to a desired extent, the adsorption medium needs to be cooled in order to avoid temperature disruptions when switching the first tower 10 to the adsorption phase. With regard to this regeneration cooling phase, simply turning off the heater 26 and running regeneration gas (e.g. moist ambient air) through the first tower 10 has the above-noted disadvantage of moistening the adsorption medium therein and consequently reducing the efficiency of the regeneration cycle.

Accordingly, during the cooling phase, heater 26 is turned off and both regeneration air control valves 24, 30 are switched to their 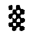 second 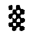 position, identified in Fig. 2 as seal position #2, and both four-way diverter valves 14, 16 are in the fully sealed position shown in Figure 1. In this position, a bleed stream of comparatively dry process air passes from bleed stream outlet 32 through air bleed port 34 and regeneration air control valve 30 to diverter valve 14, from whence it is directed back through desiccant tower 10 to extract heat from the adsorption medium contained therein. This cooling bleed stream then exits from desiccant tower 10 and is directed by diverter valve 16 through regeneration air control valve 24 to air bleed port 38, from whence it passes to inlet 40 where it is reintroduced into the process air stream. Excess heat carried by the cooling air in this bleed stream is extracted from the system in heat exchanger 42.

The portion of the process gas which is diverted into the first tower 10 via the second diverter valve 14 picks up heat from the adsorption medium therein, and then passes via the first diverter valve 16 back into the second tower 12. The complete closure of the first tower 10 off from the regeneration gas (e.g. moist ambient air) advantageously prevents the adsorption medium contained therein from picking up moisture during the cooling phase.

The regeneration air control valves 24, 30 allow the desiccant beds to be completely closed off from the ambient atmosphere. For example, when the machine is shut down, the regeneration air control valves may be closed to prevent the desiccant from picking up moisture from the ambient atmosphere. Accordingly, the present invention allows the desiccant beds to be maintained in a ready (i.e., dry) state for instant use, whereas in conventional drying systems an additional start-up time is required for drying out the desiccant which has been exposed to the ambient atmosphere, which also requires additional energy. Likewise, when the drying system is being run below design capacity (i.e., when the regenerating tower is regenerated before the adsorbing tower is fully loaded), the desiccant in the regenerated tower can be maintained in its optimum dry condition by closing the regeneration air control valves 24,'30 while the adsorbing tower is extended to full load before switching over.

After the adsorption medium in the first tower 10 has been cooled to a desired temperature, at which time the adsorption medium in the second tower 12 may have become saturated, the first and second diverter valves 14, 16 are moved in position such that the first tower 10 enters the adsorption phase and the second tower 12 enters the regeneration phase. After diverter valves 14, 16 are moved to switch the first tower 10 to the adsorption phase and the second tower 12 to the regeneration phase, the first and second regeneration air control valves 24, 30 are shifted back to seal position #1 in which gas inlet 22 and gas outlet 28 are open to the atmosphere.

Since the closed cooling circuit is shut off from the ambient atmosphere, no moisture enters the system, which would disadvantageously moisten the dried adsorption medium. Furthermore, the heat exchanger advantageously expels the heat added to the system by the heater 26 during the heating portion of the regeneration cycle. Accordingly, the system of the invention advantageously minimizes both humidity and thermal disruptions of the system.

Important advantages of the invention include the fact that the cooling bleed stream is passed downwardly through the desiccant bed in the same direction of flow as the process gas during the adsorption cycle, whereas during the heating phase, the regeneration gas is passed upwardly through the desiccant bed. The cooling bleed stream also flows in a closed loop with no opportunity to mix with atmospheric air and pick up moisture from the ambient atmosphere, but there is no need for expensive instrumentation or complex flow controls to control the flow.

The foregoing description and examples have been set forth merely to illustrate the invention and are not intended to be limiting. The invention should be construed broadly to include all variations within the scope of the appended claims.

## Claims

1. A method for controlling airflow in a desiccant drying system comprising:
first and second desiccant beds,
a first diverter valve communicating with each of said desiccant beds, a regeneration air inlet, and a process air outlet, and
a second diverter valve communicating with each of said desiccant beds, a process air inlet, and a regeneration air outlet,
a first regeneration air control valve interposed between said regeneration air inlet and said first diverter valve;
a second regeneration air control valve interposed between second diverter valve and said regeneration air outlet;
a first cooling bleed stream line connected between said process air inlet and said second regeneration air control valve;
a heat exchanger arranged upstream of said process air inlet;
a second cooling bleed stream line connected between said first regeneration air control valve and said heat exchanger; and
a heater interposed between said regeneration air inlet and said first diverter valve for heating regeneration air prior to passage of the regeneration air through the desiccant bed;
said method comprising the steps of:
(a) regenerating a first of said beds by moving said first diverter valve to a position in which said first desiccant bed communicates with said regeneration air inlet and said second desiccant bed communicates with said process air outlet, and moving said second diverter valve to a position in which said first desiccant bed communicates with said regeneration air outlet and said second desiccant bed communicates with said process air inlet;
(b) subsequently cooling said first bed by moving said second regeneration air control valve to a position in which a process air bleed stream is passed from said process air inlet through first cooling bleed stream line, said second regeneration air control valve and said second diverter valve to said first desiccant bed to extract heat from said first desiccant bed, and moving said first regeneration air control valve to a position in which said process air bleed stream after passing through said first bed is passed through said first diverter valve, said first regeneration air control valve, second cooling bleed stream line and said heat exchanger to said process air inlet.

2. A desiccant drying system, comprising:
first and second desiccant beds (10, 12),
a first diverter valve (16) communicating with each of said desiccant beds, a regeneration air inlet (22), and a process air outlet (20), and
a second diverter valve (14) communicating with each of said desiccant beds, a process air inlet, and a regeneration air outlet (28),
a first regeneration air control valve (24) interposed between said regeneration air inlet (22) and said first diverter valve (16);
a second regeneration air control valve (30) interposed between second diverter valve (14) and said regeneration air outlet (28);
a first cooling bleed stream line connected between said process air inlet and said second regeneration air control valve (30);
a heat exchanger (42) arranged upstream of said process air inlet;
a second cooling bleed stream line connected between said first regeneration air control valve (24) and said heat exchanger (42); and
a heater (26) interposed between said regeneration air inlet (22) and said first diverter valve (16) for heating regeneration air prior to passage of the regeneration air through the desiccant bed;
wherein said second regeneration air control valve (30) in one position blocks said first cooling bleed stream line and in a second position allows a bleed stream of cooling process air to pass through said first cooling bleed stream line, said second regeneration air control valve (30) and said second diverter valve (14) to a desiccant bed to be cooled; and
wherein said first regeneration air control valve (24) in one position blocks said second cooling bleed stream line, and in a second position allows the bleed stream of cooling air to pass from said desiccant bed to be cooled through said first diverter valve (16), said first regeneration air control valve (24), said second cooling bleed stream line and said heat exchanger back to said process air inlet.

## Patentansprüche

1. Verfahren zur Steuerung eines Luftdurchflusses in einem Trocknungssystem, umfassend:
erste und zweite Trockenmittelbetten,
ein erstes Umlenkventil, welches mit jedem der Trockenmittelbetten kommuniziert, ein Regenerationslufteinlass sowie ein Prozessluftauslass, und
ein zweites Umlenkventil, welches mit jedem der Trockenmittelbetten kommuniziert, ein Prozesslufteinlass und ein Regenerationsluftauslass,
ein erstes Regenerationsluftsteuerungsventil, welches zwischen Regenerationslufteinlass und erstem Umlenkventil geschaltet ist;
ein zweites Regenerationsluftsteuerungsventil, welches zwischen zweitem Umlenkventil und Regenerationsluftauslass geschaltet ist;
ein erstes Kühlluftabblasrohr, welches zwischen Prozesslufteinlass und zweitem Regenerationsluftsteuerungsventil geschaltet ist;
ein Wärmetauscher, welcher vor dem Prozesslufteinlass angeordnet ist;
ein zweites Kühlluftabblasrohr, welches zwischen erstem Regenerationsluftsteuerungsventil und Wärmetauscher geschaltet ist; sowie
eine Heizung, welche zwischen Regenerationslufteinlass und erstem Umlenkventil geschaltet ist, um die Regenerationsluft vor dem Durchlass derselben durch das Trockenmittelbett zu erwärmen;
wobei das Verfahren folgende Schritte umfasst:
a) Regenerierung eines ersten Bettes durch Bewegen des ersten Umlenkventils in eine Position, in welcher das erste Trockenmittelbett mit dem Regenerationslufteinlass und das zweite Trockenmittelbett mit dem Prozessluftauslass kommuniziert sowie durch Bewegen des zweiten Umlenkventils in eine Position, in welcher das erste Trockenmittelbett mit dem Regenerationsluftauslass und das zweite Trockenmittelbett mit dem Prozesslufteinlass kommuniziert;
b) anschließendes Kühlen des ersten Bettes durch Bewegen des zweiten Regenerationsluftsteuerungsventils in eine Position, in welcher der Prozessluftabblasstrom vom Prozesslufteinlass durch das erste Kühlluftabblasrohr, das zweite Regenerationsluftsteuerungsventil und das zweite Umlenkventil des ersten Trockenmittelbettes geführt wird, um Wärme aus dem ersten Trockenmittelbett zu gewinnen sowie durch Bewegen des ersten Regenerationsluftsteuerungsventils in eine Position, in welcher der Prozessluftabblasstrom nach Durchströmung des ersten Bettes durch das erste Umlenkventil, das erste Regenerationsluftsteuerungsventil, das zweite Kühlluftabblasrohr und den Wärmetauscher zum Prozesslufteinlass geführt wird.

2. Trocknungssystem, umfassend:
erste und zweite Trockenmittelbetten (10, 12),
ein erstes Umlenkventil (16), welches mit jedem der Trockenmittelbetten kommuniziert, ein Regenerationslufteinlass (22) und ein Prozessluftauslass (20), sowie
ein zweites Umlenkventil (14), welches mit jedem der Trockenmittelbetten kommuniziert, ein Prozesslufteinlass und ein Regenerationsluftauslass (28),
ein erstes Regenerationsluftsteuerungsventil (24), welches zwischen Regenerationslufteinlass (22) und erstem Umlenkventil (16) geschaltet ist,
ein zweites Regenerationsluftsteuerungsventil (30), welches zwischen zweitem Umlenkventil (14) und Regenerationsluftauslass (28) geschaltet ist;
ein erstes Kühlluftabblasrohr, welches zwischen Prozesslufteinlass und zweitem Regenerationsluftsteuerungsventil (30) geschaltet ist;
ein Wärmetauscher (42), welcher vor dem Prozesslufteinlass angeordnet ist;
ein zweites Kühlluftabblasrohr, welches zwischen erstem Regenerationsluftsteuerungsventil (24) und Wärmetauscher (42) angeordnet ist; sowie
eine Heizung (26), welche zwischen Regenerationslufteinlass (22) und erstem Umlenkventil (16) geschaltet ist, um die Regenerationsluft vor deren Durchlass durch das Trockenmittelbett zu erwärmen;
wobei das zweite Regenerationsluftsteuerungsventil (30) in einer Position das erste Kühlluftabblasrohr blockiert, und wobei in einer zweiten Position ermöglicht wird, dass der Abblasstrom mit Kühlprozessluft durch das erste Kühlluftabblasrohr, das zweite Regenerationsluftsteuerungsventil (30) und das zweite Umlenkventil (14) des zu kühlenden Trockenmittelbettes strömt; und
wobei das erste Regenerationsluftsteuerungsventil (24) in einer Position das zweite Kühlluftabblasrohr blockiert und wobei in einer weiteren Position ermöglicht wird, dass der Abblasstrom mit Kühlluft von dem zu kühlenden Trockenmittelbett durch das erste Umlenkventil (16), das erste Regenerationsluftsteuerungsventil (24), das zweite Kühlluftabblasrohr und den Wärmetauscher zurück zum Prozesslufteinlass strömt.

## Revendications

1. Procédé de réglage du débit d'air dans un dispositif de séchage déshydratant comprenant :
un premier et un second lits déshydratants ;
une première vanne de déviation communiquant avec chacun des lits déshydratants, une entrée d'air de régénération et une sortie d'air de traitement ; et
une seconde vanne de déviation communiquant avec chacun des lits déshydratants, une entrée d'air de traitement et une sortie d'air de régénération ;
une première vanne de réglage de l'air de régénération interposée entre l'entrée d'air de régénération et la première vanne de déviation ;
une seconde vanne de réglage de l'air de régénération interposée entre la seconde vanne de déviation et la sortie d'air de régénération :
une première conduite d'écoulement de refroidissement reliée entre l'entrée d'air de traitement et la seconde vanne de réglage de l'air de régénération ;
un échangeur thermique disposé en amont d'entrée d'air de traitement ;
une seconde conduite d'écoulement de refroidissement reliée entre la première vanne de réglage de l'air de régénération et l'échangeur thermique ; et
un dispositif de chauffage interposé entre l'entrée d'air de régénération et la première vanne de déviation pour chauffer l'air de régénération avant le passage de l'air de régénération à travers le lit déshydratant ;
le procédé comprenant les étapes consistant à :
a) régénérer un premier des lits en déplaçant la première vanne de déviation dans une position dans laquelle le premier lit déshydratant communique avec l'entrée d'air de régénération et le second lit déshydratant communique avec la sortie d'air de traitement, et à déplacer la seconde vanne de déviation dans une position dans laquelle le premier lit déshydratant communique avec la sortie d'air de régénération et le second lit déshydratant communique avec l'entrée d'air de traitement ;
b) refroidir ensuite le premier lit en déplaçant la seconde vanne de réglage de l'air de régénération dans une position dans laquelle un écoulement d'air de traitement est passé de l'entrée d'air de traitement à travers la première conduite d'écoulement de refroidissement, la seconde vanne de réglage de l'air de régénération et la seconde vanne de déviation audit premier lit déshydratant pour extraire la chaleur du premier lit déshydratant, et déplacer la vanne de réglage de l'air de régénération dans une position dans laquelle l'écoulement d'air de traitement après être passé à travers le premier lit est passé à travers la première vanne de déviation, la première vanne de réglage de l'air de régénération, la seconde conduite d'écoulement de refroidissement et l'échangeur thermique vers l'entrée d'air de traitement.

2. Dispositif de séchage déshydratant comprenant :
un premier et un second lit déshydratant (10, 12) ;
une première vanne de déviation (16) communiquant avec chacun des lits déshydratants (10, 12), une entrée d'air de régénération (22) et une sortie d'air de traitement (20) ; et
une seconde vanne de déviation (14) communiquant avec chacun des lits déshydratants, une entrée d'air de traitement et une sortie d'air de régénération (28) ;
une première vanne de réglage de l'air de régénération (24) interposée entre l'entrée d'air de régénération (22) et la première vanne de déviation (16) :
une seconde vanne de réglage de l'air de régénération (30) interposée entre la seconde vanne de déviation (14) et la sortie d'air de régénération (28) ;
une première conduite d'écoulement de refroidissement reliée entre l'entrée d'air de traitement et la seconde vanne de réglage de l'air de régénération (30) ;
un échangeur thermique (42) disposé en amont de l'entrée d'air de traitement ;
une seconde conduite d'écoulement de refroidissement reliée entre la première vanne de réglage de l'air de régénération (24) et l'échangeur thermique (42) ; et
un dispositif de chauffage (26) interposé entre l'entrée d'air de régénération (22) et la première vanne de déviation (16) pour chauffer l'air de régénération avant le passage de l'air de régénération à travers le lit déshydratant ;
dans lequel la vanne de réglage de l'air de régénération (30) dans une position bloque la première conduite d'écoulement de refroidissement et, dans une seconde position, permet à un écoulement d'air de traitement de refroidissement de passer à travers la conduite d'écoulement de refroidissement, la seconde vanne de réglage de l'air de régénération (30) et la seconde vanne de déviation (14) vers un lit déshydratant à refroidir ; et
dans lequel la première vanne de réglage de l'air de régénération (24) dans une position bloque la seconde conduite d'écoulement de refroidissement, et dans une seconde position permet à l'écoulement d'air de refroidissement de repasser du lit déshydratant à refroidir par la première vanne de déviation (16), la première vanne de réglage de l'air de régénération (24), la seconde conduite d'écoulement de refroidissement et l'échangeur thermique vers l'entrée d'air de traitement.
